# EUROPEAN PATENT APPLICATION

(11) **EP 4 455 908 A1**
(43) Date of publication of application: **30.10.2024**
(21) Application number: 23170564.1
(22) Date of filing: 28.04.2023
(51) Int. Cl.: G06F 21/10

(54) **METHOD FOR RECEIVING CONTENT IN USER DEVICE OVER CDN**

(71) Applicant: Nagravision Sàrl, 1033 Cheseaux-sur-Lausanne (CH)
(72) Inventor: BIEBER, Yann, 1033 Cheseaux-sur-Lausanne Switzerland (CH)
(74) Representative: Novagraaf International SA

(57) **Abstract**

The method comprises the steps, performed by the user device (300), of:
sending an access request to access a content to a content provider system (100);
receiving, from the content provider system (100), an access token for said content, said access token including an encrypted session key, and a Digital Right Management, DRM, license, including said session key; and
transmitting a content request including the received access token to a content delivery network and, in response, receiving from the content delivery network content data of the requested content, in a communication session;
wherein the content request further comprises an authentication tag obtained by executing a cryptographic operation, performed by a DRM client module (320) of the user device (300), of signing and/or encrypting, with the session key of the received DRM license, input data that is based on at least part of the content request.

## Description

### TECHNICAL FIELD

The present disclosure relates to the field of digital content streaming or transmission over a content delivery network.

### BACKGROUND

Many over-the-top (OTT) media service providers offering services of digital content streaming directly to end users via the Internet are using a content delivery network, CDN, to enable delivery of the digital contents to the end users.

To prevent access to a content to unauthorized user devices, a CDN access token can be generated by the service provider, transmitted to the authorized user device, and then used by the authorized user device to request the content to the content delivery network.

A main issue of the CDN access tokens is that authorized user devices can share them with unauthorized user devices, which allows the unauthorized user devices to use the CDN of the service provider without a valid authorization.

To solve this problem, a known solution consists in binding the CDN access tokens to IP addresses of the user devices. However, this solution is not appropriate for example if the user device is moving from a Wifi network to a mobile network. In such a situation, the IP address of the user device may change, which may result in an interruption in the content streaming session over the CDN and consequently a bad user experience. In practice, this solution is rarely used by the service providers.

The problem of illegal CDN access token sharing has been existing for years but, until recently, it was considered as a minor problem because access to the contents and their usage are generally protected by another authorization layer based on DRM (Digital Right Management). The contents can be encrypted, and the decryption key is embedded and protected in a DRM license that is transmitted to the user device. The DRM license can also include usage rules for restricting the usage of the content. However, some DRM licenses have been recently hacked. For example, a hacker can subscribe to a content streaming service from a legitimate service provider, as a legitimate user, requests a content and obtains a DRM license for the requested content. The hacker uses a weak point of the DRM license to extract the decryption key from the DRM license, decrypt this decryption key and share it with multiple users to allow them to access the content via the content delivery network without subscribing to the legitimate service provider. A pirate content server or portal can give access to multiple contents to illegitimate users subscribing to the pirate service, by sharing the DRM keys for decrypting the contents. The illegitimate users can set up content streaming sessions with the content delivery network of the legitimate service provider, receive encrypted content segments, and decrypt them with the DRM key provided by the pirate service portal. The users of the pirate service do not need to subscribe to the content streaming service from the legitimate service provider and generate an additional network load for the content delivery network.

Due to the recent hacking issues concerning the DRM licenses, the problem of access to the contents over a content delivery network from unauthorized users has become a major issue.

Therefore, there is a need for improving the situation. In particular, it is desired to prevent access to contents over a content delivery network, CDN, from unauthorized users.

### SUMMARY

The present disclosure concerns a method for receiving a content in a user device, comprising the steps, performed by the user device, of:
sending an access request to access a content to a content provider system;
receiving, from the content provider system, an access token for said content, said access token including an encrypted session key, and a Digital Right Management, DRM, license, including said session key; and
transmitting a content request including the received access token to a content delivery network and, in response, receiving from the content delivery network content data of the requested content, in a communication session;
wherein the content request further comprises an authentication tag obtained by executing a cryptographic operation, performed by a DRM client module of the user device, of signing and/or encrypting, with the session key of the received DRM license, input data that is based on at least part of the content request.

According to the present disclosure, the DRM technique is used to bind the access token to the device. The authentication tag is generated by a DRM client module of the user device based on the DRM license embedding the session key, and allows to prove that the user device has access to the session key, to the CDN. Moreover, the user device is acting as a relay to transmit to the CDN the encrypted session key embedded within the access token received from the content provider system.

In an embodiment, the cryptographic operation is used for:
- signing, with the session key, at least part of the content request; and
- encrypting, with the session key, a hash value of at least part of the content request.

Thus, the DRM client module of the user device may sign either the content request, or a portion of the content request, or a concatenation of different elements of the content request, with the session key. Alternatively, or additionally, the DRM client module of the user device may encrypt with the session key a hash value of either the content request, or a portion of the content request, or a concatenation of different elements of the content request. The signature and/or the encrypted hash value allow the user device to prove to the CDN that it has access to the session key. This access to the session key is protected by DRM.

In an embodiment, the access request includes DRM license challenge data. Advantageously, said DRM license challenge data only includes user data, for example identification information of the user device (e.g., a user device identifier or UID (Unique Identifier) of the user device). Advantageously, the DRM license challenge data included in the access request to access the content is not specific to the content, or to any content. It does not include content information.

The present disclosure also concerns a method, carried out by a content provider system, comprising the steps of:
- receiving an access request to access a content from a user device;
- generating a session key for a communication session for receiving the requested content in the user device over a content delivery network,
- generating an access token including said session key in encrypted form;
- generating, by a DRM license server, a DRM license including said session key; and
- transmitting the access token and the DRM license to the user device.

The content provider system generates a session key for a communication session between the CDN and the user device for delivering a content. This communication session may take place later if the user device requests said content to the CDN.

Once generated, this session key is embedded within a DRM license that is transmitted to the user device, so that a DRM client module of the user device can use it for example to sign and/or decrypt input data. this allows to securely transmit the session key to the user device and securely use it within the user device. Furthermore, this session key is encrypted and then included in the access token that is transmitted to the user device to access said content. This access token is intended to be used by the user device to request the content. This enables the content provider system to securely transmit the session key to the CDN, via the user device.

In an embodiment, the access request for the content includes DRM license challenge data, and wherein the DRM license is generated based on the received DRM license challenge data. As previously indicated, the DRM license challenge data may only include user data, for example identification information of the user device, and may not be specific to the content.

In an embodiment, the step of generating the access token includes an operation of digitally signing the access token. This allows to prove that the access token has been generated by the content provider system, in particular to the CDN when the user device requests the content to the CDN by using the access token.

For example, the step of generating the access token can include
- encrypting the session key and including the session key, in encrypted form, in the access token before signing the access token, or
- including the session key in the access token, and then encrypting and signing the access token.

Advantageously, the session key is uniquely generated for said communication session.

The present disclosure also concerns a method, performed by a content delivery network, for delivering a content to a user device, comprising the steps of:
- receiving from a user device at least one content request including an access token for the requested content and an authentication tag;
- determining a session key based on the received access token by performing a decryption;
- checking the validity of the authentication tag of the user device with the determined session key; and
- transmitting content data related to the requested content in response to the received content request, if the authentication tag of the user device is valid, in a communication session.

If the CDN receives a content request from a user device, it can extract a session key from the access token within the content request, by performing a decryption operation. If the session key has been encrypted and then included in the access token, the CDN extracts the encrypted session key from the access token and then decrypt the session key. If the session key has been included in clear in the access token before encryption of the access token, the CDN decrypts the access token and then extracts the session key.

Once the session key has been extracted from the access token, it is used by the CDN to check the validity of the authentication tag. The CDN can check if the user device, from which the authentication tag has been received, has also access to the same session key.

The authentication tag may include at least one of
- a digital signature of at least part of the content request, and
- a hash value, in encrypted form, of at least part of the content request; and the step of checking the validity of the authentication tag may include at least one of:
- verifying said digital signature with the session key; and
- decrypting the hash value with the session key, computing a hash value of at least part of the received content request, and checking if the decrypted hash value and the computed hash value match with one another.

In an embodiment, the method may further comprise a step of checking the validity of the access token, wherein the step of transmitting content data is performed only if the access token is valid.

In this way, the CDN can check if the access token has been generated by the content provider system, for example based on a signature of the access token computed by the content provider system.

The present disclosure also concerns:
- a user device configured to perform the steps of the method previously defined;
- a content service provider system including a DRM license server, configured to perform the steps of the method previously defined;
- a content delivery network, configured to perform the steps of the method previously defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a distributed system for providing digital contents to a plurality of user devices, according to an embodiment.
Figure 2 shows a simplified block diagram of a method of delivering a digital content to a user device, according to an embodiment.
Figure 3 shows a communication diagram of a configuration phase INIT of the method of figure 2, according to an embodiment.

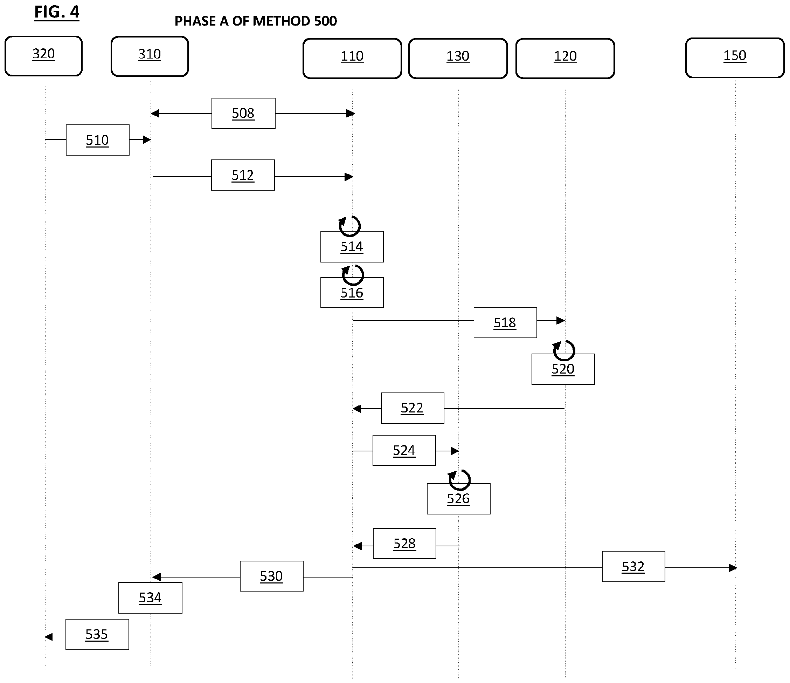

Figure 4 shows a communication diagram of a content information phase A of obtaining access to content of the method of figure 2, according to an embodiment.

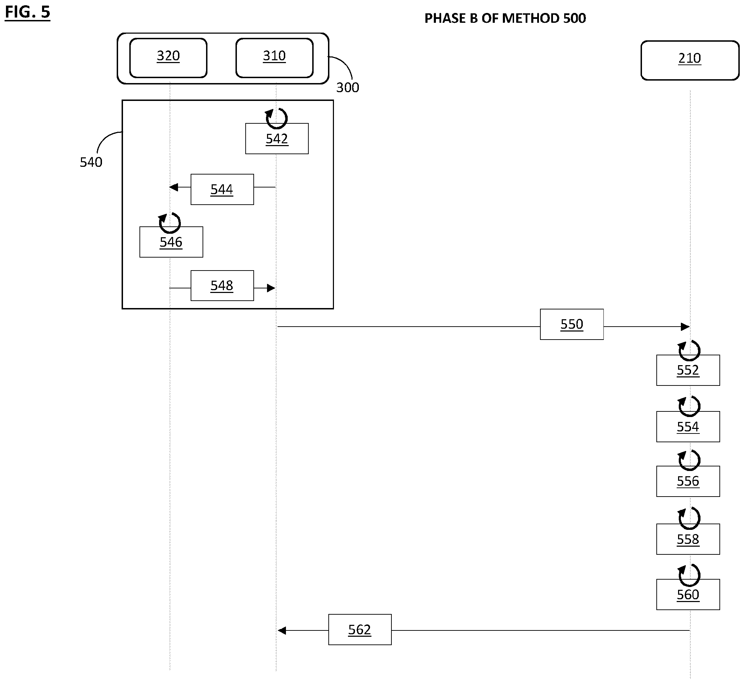

Figure 5 shows a communication diagram of a content receiving phase B of the method of figure 2, according to an embodiment.

### DETAILED DESCRIPTION

The following detailed description describes various features and functions of the disclosed systems and methods with reference to the accompanying figures. In the figures, similar symbols identify similar components, unless context dictates otherwise. The illustrative system, device and method embodiments described herein are not meant to be limiting. It may be readily understood by those skilled in the art that certain aspects of the disclosed systems, devices and methods can be arranged and combined in a wide variety of different configurations, all of which are contemplated herein.

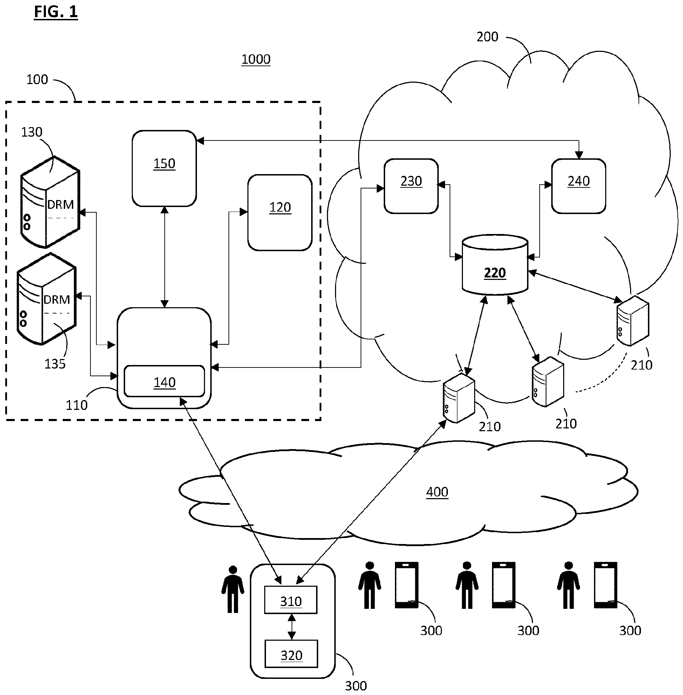

Figure 1 shows a distributed system 1000 for providing digital contents to a plurality of user devices 300. The system 1000 includes a content provider system, or content provider backend, 100, and a content delivery network (CDN) 200. The user devices 300 are connected to the content provider system 100 and the content delivery network 200, through one or more communication network(s) 400 including for example the Internet. The content provider system 100 is connected to the content delivery network 200 through one or more communication channel(s) or network(s).

The content provider system or backend 100 assumes the role of managing access to digital contents. In an embodiment, the content provider system 100 includes a content management system (CMS) 110, a CDN access token generator 120, a DRM license server 130. Optionally, the content provider system 100 may further include another DRM license server 135, and a data analytics server or system 150.

The content provider system or backend 100 offers a content service, for example a content streaming service, to user devices 300 and provides access to contents to the user devices 300, the contents being delivered to the user devices 300 by the CDN 200. The digital contents can be videos, audios, text files, software, games, or any other kind of data.

The user devices 300 can interact with a user interface 140, such as a website, of the content provider system 100, through a communication network (e.g., the Internet) 400, to authenticate themselves, receive information about the available contents, request access to a given content and receive content access data, such as a content access token, also termed as a CDN access token, for accessing the requested content through the content delivery network 200. For example, the user interface 140 is implemented with a CMS API (Application Programming Interface) that is part of the backend 100, and the user device 300 includes an application that may contain a frontend application or code configured to do webservice calls to the CMS API.

The content management system 110 is configured to manage digital contents and offer access to digital contents to user devices 300. In an embodiment, the content management system 110 is configured to provide access to digital contents on the user interface 140 to the user devices 300 (e.g., website visitors).

The content management system 110 is also configured to manage client or user information (e.g., user or client subscriptions), for example for clients or users that have subscribed to the content service.

A subscriber to the content service provided by the system 100 can be referred as a client. A client account may be assigned by the content provider system 100 to each client. A client may log in to its client account with a user device 300 by performing an authentication process based on client credentials (e.g., user ID and password combination, biometric data, etc.). A client may be entitled to use different user devices to log in to its client account.

In operation, the content management system 110 is configured to authenticate a user device 300 based on user or user device or client credentials, receive an access request for a given content from the user device 300 and, if the authentication of the user device 300 has been successful, transmit a CDN access token for the requested content to the user device 300 to enable access to the content through the CDN 200, as will be described later in more detail.

The management of contents and clients, and/or users, of a content service is well-known by the person skilled in the art and will not be described in more detail.

Furthermore, in the present disclosure, the content management system 110 is configured to generate session information for communication sessions between the content delivery network 200 and user devices 300 for delivering contents to the user devices 300.

A communication session between the content delivery network 200 and a user device 300 for delivering a content to said user device 300 may be characterized by various parameters or metadata such as:
- user information including for example a user or client identification information (e.g., user ID), and/or user device information including for example a user device identification information,
- content information including for example a content identification information or content identifier, and
- optionally time information, including for example timestamp data (e.g., timestamp data indicative of when the user device 300 requested the content to the content provider system 100) and optionally an expiration duration of the session starting for example from the point in time when the user device 300 requested the content to the content provider system 100.

The session information generated for a communication session for receiving a requested content in a user device 300 from the CDN 200 includes a session key and optionally a session identifier, or session ID, associated with the session key.

The session key is a cryptographic key, for example a symmetric key, intended to be used for a communication session by a user device 300 and by the CDN 200. It is generated by the content provider system 100, for example by the content management system 110. The session key may be uniquely generated for one communication session between the CDN 200 and a user device 300 for receiving the requested content. The session keys generated for different communication sessions between the CDN 200 and different user devices 300 are advantageously different from one another.

The session identifier, or session ID, allows to identify the communication session, in particular if there are several sessions between a user device 300 and the content delivery network 200. The session identifier uniquely identifies one communication session. However, it is optional to use a session identifier.

In an embodiment, the content provider system 100 may use several CDN systems, or content delivery networks, at the same time. In that case, the content management system 110 can be configured to generate session information for a given content on each CDN. Let's consider that the content provider system 100 uses N content delivery networks, with N>1. In that case, the content provider system 100 is configured to generate N different session keys for N communication sessions between the N content delivery networks and a requesting user device 300, respectively, and N different CDN access tokens.

The content management system 110 is implemented with software and hardware. In an embodiment, the content management system 110 is a server implementing a content management software. The operation of the content management system 110 will be described later in more detail, in the description of a method 500.

In an embodiment, the DRM license server, or DRM server, 130 is connected to the content management system 110, through a local connection or a communication network. It may be configured to generate DRM licenses for session keys. The session keys are intended to be used in communication sessions between the content delivery network 200 and user devices 300 to deliver user-requested contents to the user devices 300. A DRM license for a session key is a data structure including the session key, for example in encrypted form. For example, the session key is encrypted with a key bound to the requesting user device 300. The session key is securely embedded or included in the DRM license, for example by encryption.

The DRM license for a session key may further include usage rules and/or metadata. In an embodiment, the DRM license includes a usage rule indicating that the session key is authorized to be used for encryption and/or signature with said session key. Optionally, the DRM license includes a session identifier, in the metadata.

In an embodiment, the DRM license may include several session keys, for example if the content provider system 100 uses several CDN systems to deliver contents to user devices. Alternatively, if the content provider system 100 uses N CDN systems to deliver contents to user devices, it could generate N DRM licenses for the N different session keys generated (i.e., one DRM license per session key).

In an embodiment, the DRM license server, or DRM server, 135 is also connected to the content management system 110, through a local connection or a communication network. It may be configured to generate DRM licenses for digital contents. As well known by the person skilled in the art, a DRM license for one or more contents is a data structure including a cryptographic key, or content key, in encrypted form, for decrypting one or more digital content(s). The DRM license may include other data, such as usage rules. For example, an usage rule is a rule authorizing only decryption of the one or more contents with the content key.

In the present embodiment, the DRM server 130 used to protect the session keys and the DRM server 135 used to protect the content keys are two separate DRM servers, respectively dedicated to session keys and to content keys.

The DRM server 130 and the DRM server 135 may use different DRM implementations or techniques, respectively for session keys and for content keys.

Alternatively, the DRM server 130 and the DRM server 135 might be fused or combined in a single DRM server.

The content management system 110 may perform authorization operations to obtain DRM licenses from the DRM server 130 or the DRM server 135 for user-requested contents. Alternatively, the DRM server 130 and/or the DRM server 135 may perform the authorization operations.

The DRM server 130 may be a separate entity as shown in figure 1, or it may be combined with the content management system 110. In the same manner, the DRM server 135 may be a separate entity as shown in figure 1, or it may be combined with the content management system 110.

The CDN access token generator 120 assumes the role of generating CDN access tokens for digital contents requested by user devices 300. It may be a server. A token is a structure of data, or a message, that is digitally signed and/or encrypted. The signature ensures integrity of the token, while the encryption ensures confidentiality.

The content management system 110 may perform authorization or authentication operations to obtain CDN access tokens from the CDN access token generator 120 for user-requested contents. Alternatively, the CDN access token generator 120 may perform the authorization or authentication operations. In any case, authentication and authorization operations are advantageously performed before delivering CDN access tokens or other data to user devices 300 from the content provider system 100.

A CDN access token generated for a given content is bound to information about the content it provides access to. In an embodiment, the CDN access token is bound to a network address, such as an URL, of the content, for example to a network address, or URL, of a directory or memory location in the CDN 200 where content data of said content (e.g., a content manifest file, content segments or chunks and any other resource needed to use or play the content) is stored. The URL of this directory or memory location can be designated as a "content base URL".

In an embodiment, the URLs of all data related to a content, for example the URLS of the content manifest and of the URLs of the content segments or chunks, may be derived from the content base URL. An illustrative example of different URLs for a given content, named as "mycontent", is given below:
- content base URL: https://cdn.domain.com/mycontent/
- content manifest URL: https://cdn.domain.com/mycontent/manifest.mpd
- first video segment of the content: https://cdn.domain.com/mycontent/video-sd/1. m p4

There are different ways to bound the CDN access token to the network address of the content, that will be described later.

The CDN access token may be signed with a cryptographic key of the content provider system 100. This cryptographic key may be a private key of a pair of public and private asymmetric keys of the content provider system 100. Alternatively, this cryptographic key may be a secret symmetric key that is shared by the content provider system 100 and the content delivery network 200.

Furthermore, in the present disclosure, the CDN access token contains session information about a communication session between the content delivery network 200 and a user device 300 to deliver the content to which the CDN access token provides access to. This communication session may take place in the future to deliver the content (i.e., the content for which the CDN access token has been generated) to the user device 300 over the content delivery network 200. The session information includes the session key, in encrypted form, and optionally the session identifier, assigned to the communication session. In the CDN access token, the session key is encrypted with a cryptographic key. In an exemplary embodiment, the cryptographic key used to encrypt the session key in the CDN access token is a secret symmetric key shared by the CDN access token generator 120 and the content delivery network 200. Alternatively, the cryptographic key can be asymmetric, namely a private key of a pair of private and public keys of the CDN access generator 120. In that case, the CDN 200 has access to a public key certificate of said public key.

In another embodiment, the CDN access token is encrypted by the CDN access generator 120 with a cryptographic key (e.g., a symmetric key shared by the CDN access generator 120 and the CDN 200, or a private asymmetric key associated with a public key accessible to the CDN). In that case, the session key is encrypted by encryption of the CDN access token.

In another embodiment, the CDN access token might be encrypted and signed by the CDN access generator 120.

The CDN access token generator 120 may be a separate entity as shown in figure 1, or it may be combined with the content management system 110.

The data analytics server 150 assumes the role of logging, or recording, information and/or parameters of the communication sessions configured by the content provider system 100 for delivering requested contents to user devices 300 through the content delivery network 200. The logged information, or parameters, about a communication session may include at least part of a session identifier, user information (e.g. a user or client identifier), user device information (e.g., a user device identifier), content information (e.g., a content identifier), and time information (e.g., timestamp data indicating when the user device requested the content and optionally expiration duration). The logged information about a communication session may be used later in case there is a problem with said communication session, for example to revoke it. The timestamp data and optionally the expiration duration may be used to limit in time the access to the requested content by the user device 300. They can be enforced directly by the CDN 200.

Although shown separately, the content management system 110, the CDN access token generator 120, the DRM license servers 130, 135, the analytics server 150, and/or other server(s) may be combined. The entities 110, 120, 130, 135, 150 and/or other servers, may be computing devices and may comprise memory storing data and also storing computer executable instructions that, when executed by one or more processors, cause the server(s) to perform steps described herein.

The content delivery network 200 is geographically distributed network of edge nodes or servers 210. It has the function of delivering, or transmitting, the digital contents to the user devices 300 via the edge nodes 210. As known, the content delivery network 200 may also comprise a CDN origin server, not represented, having the function of receiving contents from the content provider system 100 and cache them into the each of the plurality of CDN edge servers or nodes 210.

The digital contents may be encrypted. They may also be segmented or divided into content segments or chunks. The content segments or chunks can be associated with a manifest or playlist file, as described later.

In an embodiment, the content delivery network 200 may further include a configuration database 220, a configuration server 230, and a revocation list management server 240.

The configuration server 230 assumes the role of managing the key data shared or agreed on by the CDN 200 and the content provider system 100.

The revocation list management server 240 is responsible for creating and updating a revocation list including session identifiers that have been revoked.

The configuration database 220 is for storing the key data agreed by the CDN 200 and the content provider system 100, and the revocation list. It is accessible by the edge nodes 210.

In an embodiment, the delivery of a content to a user device 300 over the CDN 200 is carried out based on access data (e.g., CDN access token) received from the content provider system 100. In operation, a user device 300 may initially interact with the content provider system 100, for example via the user interface 140, request access to a given content to the content provider system 100, receive access data (e.g., CDN access token), from the content provider system 100, for accessing to the requested content, and then receive the requested content from the content delivery network 200 based on the received access data (e.g., CDN access token). The received content may need to be decrypted using a DRM license of the content, as described later.

Although shown separately, the configuration database 220, the configuration server 230, and the revocation list management server 240 and/or other database(s) and server(s) may be combined. The entities 220, 230, 240 and/or other servers, may be computing devices and may comprise memory storing data and also storing computer executable instructions that, when executed by one or more processors, cause the server(s) to perform steps described herein.

The user devices 300 may be any type of user device or user equipment 300, including computer, laptop, PC, desktop, smartphone, tablet, etc... However, the term "user device" is to be broadly construed to cover any computing device.

Although the user devices 300 are illustrated in FIG. 1 as smartphones, as discussed above, other embodiments are possible. Thus, the example smartphone 300 is not meant to be limiting.

The user devices 300 are configured to interact with the content provider system 100 to request access to digital contents, and then fetch or receive the requested contents through the content delivery network 200.

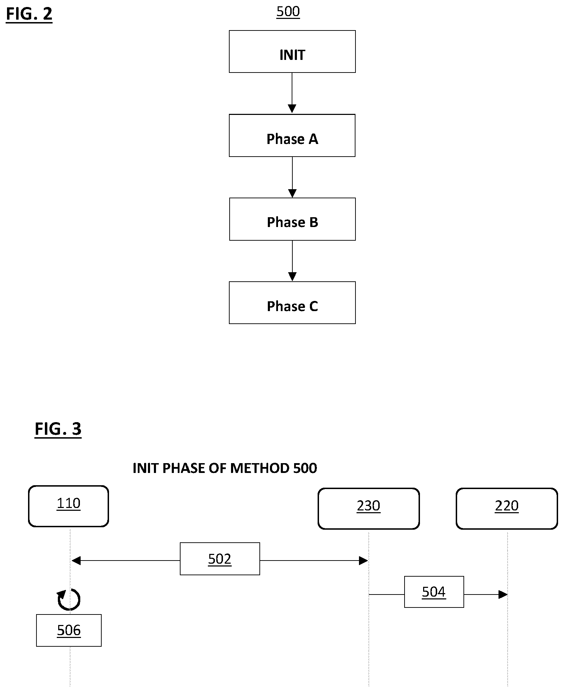

In an embodiment, a user device 300 may include a content usage module 310, for example a content player module, and a content decryption module 320, as illustrated in figure 3.

The content usage module 310 may be configured to communicate with the content provider system 100 to request access to a digital content, communicate with the content delivery network 200 to receive or download the requested content, and then use the content for example to play it.

In an embodiment, the content decryption module 320 includes a DRM client module. The DRM client module 320 is configured to execute cryptographic operations, actions, or functions, such as decrypting, encrypting, digitally signing and/or checking a digital signature.

The DRM client module 320 of the user devices 300 and the DRM servers 130, 135 use the same DRM technology, for example Widevine^{®} or PlayReady^{®}.

The user device 300 may be implemented with hardware and software. It may include one or more processors, application(s), and a DRM client. The operations, function, and/or actions that the user device 300 is configured to carry out will be described in more detail in the description of the method 500.

] FIG. 2 is a simplified block diagram representing a method 500, according to an embodiment. Method 500 shown in FIG. 2 presents an embodiment of a method that could be used with the content provider system 100, the content delivery network 200, and the user devices 300, for example.

The operations of method 500 presented below are intended to be illustrative. Method 500 may include one or more operations, functions, or actions, as illustrated by one or more of blocks and arrows. Although the blocks may be illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for the method 500 and other processes and methods disclosed herein, the flowchart shows functionality and operation of one possible implementation of present embodiments. In this regard, each block may represent a module, a segment, a portion of a manufacturing or operation process, or a portion of program code, which includes one or more instructions executable by a processor for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, for example, or a tangible storage device.

In addition, for the method 500 and other processes and methods disclosed herein, each block may represent circuitry that is wired to perform the specific logical functions in the process, for example.

The method 500 may include a method for receiving or delivering a digital content in a user device 300.

The method 500 may include a configuration phase INIT, a content access obtention phase A, a content delivery phase B, and optionally a session revocation management phase C.

The configuration phase INIT may include the steps 502, 504, 506, shown in figure 3.

In the step 502, the content delivery network 200 and the content provider system 100 agree on key data. In an embodiment, the step 502 may be carried out by the configuration logic module 230 of the CDN 200 and by the content management system 110 of the content provider system 100.

In an embodiment, the agreed key data may include two sets of keys: one used for authenticity of the CDN access tokens and one used for confidentiality of the session keys. Different cryptographic schemes or algorithms, based on symmetric key(s) or asymmetric keys, are possible for each set of key(s).

In another embodiment, one single set of key(s) can be used with a cryptographic scheme or algorithm to provide both authenticity (integrity) and confidentiality. In that way, it is possible to provide confidentiality of the CDN access tokens and confidentiality of the session keys, by using one set of key(s). For example, the AES-GCM scheme could be used, which allows authenticity and encryption with a single symmetric key.

In the present embodiment, only illustrative and non-limitative, the agreed data includes a cryptographic key k1 for confidentiality of the session keys, in other words for encrypting session keys. The cryptographic key k1 may be a secret symmetric key shared between the content delivery network 200 and the content provider system 100. It can be stored in the configuration database 220 of the content delivery network 200, in a step 504, and in a memory of the CDN access token generator 120 and/or in a memory of the content management system 110, in a step 506.

In a variant, a pair of public and private asymmetric keys could be used for confidentiality of the session keys. In that case, the private key can be stored in a memory if the CDN access token generator 120, while a corresponding public key certificate can be stored in the configuration database 200 of the content delivery network 200.

In the present embodiment, the agreed key data may further include a pair of asymmetric keys, including a public key K2_{pub} and a private key K2ₚᵣ, for authenticity (integrity) of the CDN access tokens, i.e. for signing the CDN access tokens and verifying the signatures. The private key K2ₚᵣ may be stored in a memory of the CDN access token generator 120 and/or in a memory of the content management system 110. A public key certificate, including the public key K2_{pub} and information about the owner of the keys K2_{pub} and K2ₚᵣ and signed by a certificate authority, may be stored in the configuration database 220 of the content delivery network 200.

Alternatively, or additionally, the agreed key data may include a secret symmetric key, shared by the content provider system 100 and the content delivery network 200, for signing the CDN access tokens and verifying the signatures. This secret key may be stored in the configuration database 220 of the CDN 200 and in a memory of CDN access token generator 120 and/or in a memory of the content management system 110.

The key data stored in the database 220, here the secret key k1 and the public key K2_{pub} and/or the certificate of the public key K2_{pub}, are accessible by the edge nodes 210 of the CDN 200.

The configuration phase including the steps 502 to 506 can be performed periodically, for example once per day.

### Phase A of content access obtention

The phase A may include the steps 508 to 535.

In a step 508 (optional), the user device 300 may interact with the user interface (e.g., a website) of the content management system 110 to consult and/or receive information about digital contents available on the user interface 140. The step 508 can be performed by the module 310.

At a step 510, the method 500 includes the DRM client module 320 generating and providing DRM license challenge data, or DRM challenge data, to the content player module 310, for example upon request. The DRM challenge data may include all data that is needed for the license server 130 to create a license and handle license revocation. The generated DRM license challenge data may include information about the user device 300, such as a unique device identifier and optionally a device model and version(s). The DRM challenge data may further include a device digital certificate including a public key of a pair of public and private asymmetric keys of the user device 300. The DRM challenge data is not specific to a content. In other words, it does not contain any information about a content. In an embodiment, it only contains information about the user device 300, or more generally user data. The DRM challenge format is specific to the DRM technique. The DRM license challenge data can be digitally signed by the DRM client module 320 to prevent changes in transition.

Then, in a step 512, the user device 300 requests access to a given content to the content provider system 100. For that purpose, the module 310 transmits an access request for the given content with the DRM license challenge data generated at the step 510, to the content management system 110. The access request may include information about the user, like a user identifier, and/or user credentials (e.g., a user identifier and password combination, or biometric data, ...). Alternatively, instead of the user credentials, the access request may include a user access token previously received by the user device 300 from the content provider system 100, during a sign in operation. The access request further includes information identifying the requested content, like a content identifier (ID). The access request may further include the DRM license challenge data generated at the step 510. Alternatively, the DRM license challenge data may be transmitted separately (i.e., not in the request). The access request may be a request for an address of the requested content on the CDN 200, such as a content URL. For example, the access request can have the following simplified form:
Get content URL(user credentials, DRM challenge data, content ID).

It should be noted that the DRM license challenge data is generated or provided by the DRM client module 320 at the step 510, before requesting access to the content to the content provider system 100 at the step 512.

The content management system 110 receives the access request from the user device 300 (step 512).

Then, in a step 514, the content management system 110 may check the received user credentials or the received user access token. If the user credentials (or user access token) are valid, the content management system 110 authorizes the user device 300 to access the content management system 110. If the user credentials (or user access token) are not valid, the content management system 110 denies access to the user device 300. In that case, the content management system 110 may send an error message to the user device 300 and end the process.

In a step 516, if the user device 300 has been authorized to access to the content by the content management system 110, the content management system 110 generates session information including a session key and optionally a session identifier, or session ID, for a communication session, that may be about to start, between the content delivery network 200 and the user device 300 for receiving the requested content. The generated session information may be associated with session parameters or metadata including for example:
- information about the user, for example a user identifier, and/or information about the user device 300, for example a user device identifier,
- information about the requested content, for example a content identifier,
- and optionally timestamp data indicative of when the access request has been received by the content management system 110, and an expiration duration.

The session key and the associated session parameters or metadata (session ID, user and/or device ID, content ID, timestamp data) are assigned to a communication session between the CDN 200 and the user device 300 to receive the requested content in the user device 300 from the CDN 200. The session key and the associated metadata may be transmitted to the analytics server 150.

The session identifier uniquely identifies the communication session between the CDN 200 and the user device 300 for receiving the requested content. In an embodiment, the session identifier is randomly generated.

The session key is specific, unique, to the communication session, for example a streaming session, between the CDN 200 and the user device 300 for receiving the requested content. The communication session is for example identified by a content identifier, a user device identifier and optionally timestamp data. In an embodiment, the session key is randomly generated. For example, it is a binary code of x bits (e.g., x= 128 or 256, which is only an illustrative et non-limiting example).

Then, in a step 520, the access token generator 120 generates a CDN access token for giving access to the requested content, for example upon request 518 of the CMS 110. The request 518 from the CMS 110 may include the session key and optionally the session identifier, generated in the step 516. Alternatively, the access token generator 120 may have access to the session key and the session identifier stored in a memory or database.

The CDN access token giving access to a given content includes data and a signature. For example, it can be implemented as a JSON (JavaScript Object Notation) structure, for example as a JSON Web Token (JWT), or include a simple text. It is bound to a network address, here an URL, on the CDN 200 of the requested content. For example, it is bound to the content base URL of the requested content. As previously indicated, there are different ways to bind the CDN access token to the network address or URL of the content it provides access to. The list below gives non-limitative examples of such binding, in case of a content URL is used as content network address :
- the content URL is included in the CDN access token;
- a hash value of the content URL is included in the CDN access token;
- a hash value of the content URL is included in the computation of the CDN access token signature without copying this hash value in the CDN access token itself, which has the advantage of decreasing the size of the CDN access token as anyway the CDN access token needs to be included in a CDN content request to be useable and this CDN content request includes the content URL.

Furthermore, in the present disclosure, the CDN access token also contains the session key, in encrypted form, and optionally the session identifier, generated in the step 516.

In the present embodiment, to provide confidentiality for the session key, the session key is encrypted by the CDN access token generator 120 for example with the key k1 shared by the content provider system 100 and the CDN 200. The encrypted session key is included in the CDN access token.

Furthermore, to provide authenticity (integrity) of the CDN access token, the CDN access token including the encrypted session key is signed by the CDN access token generator 120 for example with the private key K2ₚᵣ.

As previously described, other cryptographic schemes could by alternatively used to provide confidentiality for the session key and authenticity for the CDN access token. For example, a private asymmetric key could be used to encrypt the session key. In another example, a secret symmetric key shared by the CDN 200 and the content provider system 100 may be used to sign the CDN access token.

Alternatively, a cryptographic scheme or algorithm that provides both authenticity (integrity) and confidentiality and uses one single set of key(s) could be used. The set of key(s) includes for example a single symmetric key shared by the CDN 200 and the content provider system 100 or a single pair of public and private asymmetric keys of the content provider system 100. In that case, the session key can be included in the CDN access token that is then encrypted and signed, by the CDN access token generator 120, with the secret symmetric key or with the private asymmetric key. In that case, the session key is encrypted by encryption of the CDN access token.

Then in a step 522, the access token generator 120 transmits the generated CDN access token to the content management system 110.

In a step 524, the content management system 110 requests the DRM license server 130 to create a DRM license for the session key. The request may include the DRM challenge data received from the user device 300 in the step 512, the session key, and optionally the session identifier. The step 524 may be performed before or in parallel to the step 518.

In a step 526, the DRM server 130 generates a DRM licence for a session key, based on the DRM challenge data. The generated DRM license includes the session key, that is protected for example by encryption, and optionally one or more usage rules and metadata.

The usage rules indicate for which use by the DRM client the session key is intended or permitted. For example, the usage rules indicate that the session key can only be used by the DRM client to sign and/or encrypt input data. Optionally, the usage rules may include an expiration date consistent or aligned with an expiration date of the CDN access token. Other usage rules could be implemented for the session key.

The metadata can include the session identifier. This session identifier does not need to be encrypted. Furthermore, it is optional.

Then, in a step 528, the DRM server 130 transmits the generated DRM license to the content management system 110.

Then, in a step 530, the content management system 110 transmits the CDN access token and the DRM license to the user device 300, in response to the access request (step 512).

The transmitted CDN access token and the transmitted DRM license both include the same session key in encrypted form and the same session identifier that may not be encrypted. The session key may be in a first encrypted form in the CDN access token and in a second encrypted form, different from the first encrypted form, in the DRM license.

In the present embodiment, in order to have access to a plurality of contents, for example a number X of contents, the user device 300 transmits X access requests to the content provider system 100, one per content (each access request including the content ID of one requested content), and receives X pairs of CDN access token and DRM license for X session keys, respectively.

Alternatively, the user device 300 may transmit one access request for a plurality of contents, for example for X contents, to the content provider system 100. In that case, the access request may include N content identifiers respectively for the N contents. In response, the content provider system 100 may transmit N sets or pairs of CDN access token and DRM license for N different session keys, respectively for the N contents.

In a step 532, the content management system 110 logs or records information and/or parameters and/or metadata related to the request/response process including the steps 508 to 530 in the analytics server 150. The logged information includes for example the session identifier, and parameters or metadata of the corresponding communication session. These parameters or metadata may include the user identifier, the user device identifier, the content identifier, and/or timestamp data.

In a step 534, the content usage module 310 (e.g., player module) receives the DRM license and the CDN access token and, in a step 535, imports the DRM license into the DRM client module 320. After importation of the DRM license in the DRM client module 320, the session key can be used by the DRM client module 320 to sign and/or encrypt input data (i.e., data inputted into the DRM client module 320).

Although the communication session, that is about to start between the user device 300 and the CDN 200, is identified by a session identifier, as discussed above, other embodiments that do not use session identifiers to identify the communication sessions are possible. Thus, the example of the session identifier is not meant to be limiting.

### Phase B of content delivery or streaming

After the phase A, the method 500 includes the phase B in which the user device 300 downloads or receives the requested content from the content delivery network 200, upon request(s), during a communication session between the CDN 200 and the user device 300, for example a playback session of the requested content.

The phase B may be carried out after receiving the CDN access token and the DRM license by the user device 300, preferably upon receiving them.

The phase B includes a step 540 of generating one or more CDN content requests to request content data of the requested content, performed by the user device 300.

An initial CDN content request may request a content manifest or playlist file of the requested content. Then, subsequent CDN content requests may request the content segments, chunks and/or other resources needed to use or play the requested content, based on the manifest file.

The manifest or playlist file of a content contains information about the network addresses (e.g., URLs) of content segments, chunks or other resources of the requested content. The segment network addresses (e.g., segment URLs) are relative addresses. They may be built from a root part of the received network address of the manifest file by adding segment identifiers, for example segment indexes or numbers, contained in the manifest file.

At block 542, the step 540 includes the module 310 creating or preparing or editing the CDN content request. The CDN content request may include the following elements:
- a network address such as an URL of the requested content data (e.g., manifest file, content segment, chunk, other resource needed to use or play the content) and
- the CDN access token as previously received from the content provider system 100 for the requested content (step 530).

The CDN access token included in the CDN content request comprises the session key in encrypted form (either by specific encryption of the session key, or by encryption of the CDN access token), as received from the content provider system 100.

Furthermore, at block 546, the step 540 includes the module 310 obtaining an authentication tag by executing a cryptographic operation, performed by a DRM client module 320, of signing and/or encrypting, with the session key of the received DRM license, input data that is based on at least part of the content request. In other words, the DRM client module 320 executes a signing and/or encrypting operation with the session key of the DRM license on input data, said input data being based on at least part of the CDN content request, to produce the authentication tag. The input data is provided by the module 310 to the DRM module 320 at block 544.

According to different embodiments, the input data may include the CDN content request, or a part of the CDN content request, or a concatenation of different elements or components of the CDN content request. For example, the input data includes the network address or URL embedded in the CDN content request. Optionally, it may further include one or more headers of the CDN content request, for example "userAgent" header, and/or query parameters of the CDN content request. If the input data includes different elements such as the URL, one or more headers, and query parameters, those different elements can be concatenated before being provided as input data to the DRM client module 320.

In a variant, the input data provided to the DRM client module 320 at block 544 includes a hash value of the data above described (e.g., a hash value of the CDN content request, or a hash value of a part the CDN content request, or a hash value of a concatenation of different elements or components of the CDN content request). The hash value can be computed by processing or computing means of the user device 300, external to the DRM client module 320.

Then, in the step 546, the DRM client module 320 uses the DRM license including the session key, that has been previously imported (step 535), to sign and/or encrypt the received input data.

In an embodiment in which the input data includes the CDN content request, or a part of the CDN content request, or a concatenation of different elements of the CDN content request, the input data is advantageously signed by the DRM client module 320 with the session key. For example, the input data is signed using a cryptographic function such as HMAC (Hash-based message authentication code). In that case, the authentication tag includes the signature of the input data.

In another embodiment in which the input data includes a hash value, this hash value may be encrypted by the DRM client module 320 with the session key. In that case, the authentication tag includes the hash value in encrypted form.

Thus, the output of the signing or encrypting operation performed by the DRM client module 320 at step 546 includes a signature and/or an encrypted hash value, as an authentication tag. This output is returned to the module 310, in a step 548.

In an embodiment, the authentication tag may include both a signature of at least part of the content request and an encrypted hash value of at least part of the content request.

Then, the module 310 proceeds with including the authentication tag, that includes the signature and/or the encrypted hash value generated in the step 546, in the CDN content request, in the step 542 of preparing the CDN content request. Thus, the CDN content request includes the network address (e.g., an URL) of the requested content data, the CDN access token as received from the content management system 110, and the authentication tag computed by the DRM client module 320 with the session key. For example, the CDN content request is of the form of an HTTP request including the URL with query parameters and headers. The CDN access token and the authentication tag may be provided as query parameters or headers of the HTTP request.

Then, in a step 550, the module 310 transmits the CDN content request to an edge node 210 of the CDN 200. Thus, the edge node 210 receives the CDN content request including the requested content network address or content URL, the CDN access token, and the authentication tag.

In a step 552, the edge node 210 checks the validity of the CDN access token.

For that purpose, the edge node 210 may verify the signature of the CDN access token to determine if the signature is valid. If the CDN access token has been signed with the private key K2ₚᵣ of the content provider system 100, the edge node 210 uses the associated public key K2_{pub} to check the signature. If the CDN access token has been signed with a secret symmetric key shared by the content provider system 100 and the CDN 200, the edge node 210 uses this shared secret key to check the signature.

Furthermore, the edge node 210 may verify if the content to which the CDN access token provides access to matches the content requested in the CDN content request. The way this verification is carried out depends on how the CDN access token is built. Illustrative examples are given below:
- if the content URL is included in the CDN access token, the edge node 210 is configured to compare the content URL in the CDN access token and the content URL in the CDN content request and give access to the content to the user device if both URLs match;
- if a hash value of the content URL is included in the CDN access token, the edge node 210 is configured to compare the hash value from the CDN access token and a computed hash value of the content URL from the CDN content request and give access to the content if both hash values match;
- if a hash value of the content URL is included in the computation of the CDN access token signature, the edge node 210 is configured to verify the signature of the CDN access token by using a hash value of the content URL from the CDN content request.

If the CDN access token is valid (i.e., the signature has been successfully verified and the content which the CDN access token provides access to matches the content requested in the CDN content request), the edge node 210 determines the session key based on the CDN access token. For that purpose, the edge node 210 may extract the session key, in encrypted form, from the CDN access token, in a step 554. Then, in a step 556, the edge node 210 decrypts the session key for example with the secret key k1 shared by the content provider system 100 and the CDN 200. In another embodiment, the edge node 210 decrypts the session key with a public key of the content provider system 100.

In another embodiment in which the CDN access token has been encrypted by the content provider system 100, the edge node 210 may decrypt the CDN access token and then extract the session key from the CDN access token. In that case, checking the validity of the CDN access token may include successfully decrypting the CDN access token.

If the CDN access token is not valid, the edge node 210 denies access to the requested content to the user device 300, and may send an error message to the user device 300.

Once decrypted (step 556), the session key is then used by the edge node 210 to check or verify the validity of the authentication tag of the CDN content request, in a step 558. If the authentication tag includes a signature of at least part of the content request, the edge node 210 checks the signature to determine if the authentication tag is valid. If the authentication tag includes a hash value in encrypted form, the edge node 210 decrypts the hash value, computes the hash value based on the received CDN content request, and compares the decrypted hash value and the computed hash value to check if they match, which means that the authentication tag is valid.

A valid authentication tag allows the edge node 210 to determine that the requesting user device 300 has access to the session key. If the authentication tag received with the CDN content request is valid, the method proceeds with the steps 560 (optional), 562 described below.

Optionally, if the authentication tag is valid, the edge node 210 may check if the session identifier of the communication session between the CDN 200 and the requesting user device 300 was not revoked, in a step 560. For example, the edge node 210 may internally cache a revocation list including the session identifiers of communication sessions that were revoked. The revocation list may be received from the configuration database 220 and periodically updated. To check if the session identifier of the current communication session was not revoked, the edge node 210 searches the corresponding session identifier in the cached revocation list. If no match is found, the edge node 210 determines that the session identifier was not revoked. If a match is found, the edge node 210 determines that the session identifier was revoked and therefore denies access to the requested content to the user device 300.

If the authentication tag is not valid, the edge node 210 denies access to the requested content to the user device 300, and may send an error message to the user device 300.

If access to the content requested by the user device 300 is authorized, the edge node 210 transmits to the user device 300 the requested content data (e.g., a content manifest or playlist file, content segments or chunks, or other resources needed to use or play the requested content), in a step 562.

The steps 540 to 562 are carried out for each CDN content request from the user device 300 to the edge node 210.

The user device 300 may need to obtain a DRM license embedding a content key for the requested content, for example if the requested content is encrypted and/or the use of the content is limited by usage rules. In the present embodiment, the DRM license for the requested content is delivered by the DRM server 135, different from the DRM server 130 used to deliver the session keys. The user device 300 can receive the DRM license for the requested content from the DRM server 135 upon request, in a known manner. Then, when receiving the content segments, chunks and/or other resources, in encrypted form, of the requested content, the user device 300 may decrypt them. The decryption may be carried out by the DRM client module 320 using the DRM license received for the requested content.

### Phase C of revocation management

The purpose of the phase C is to manage a revocation list including session identifiers related to communication sessions between the CDN 200 and user devices, that have been detected as illegal. This phase C is optional.

An anti-piracy system 500 is responsible for monitoring the communications or data streams between the CDN 200 and user devices 300, and optionally between the content provider system 100 and user devices 300, to detect a pirate data stream. The anti-piracy system 500 may use a watermarking detection to detect a pirate stream, or any other appropriated anti-piracy technique.

After detection of a pirate communication session between the CDN 200 and a user device 300, the anti-piracy system 500 may request the session identifier of the pirate communication session to the analytics server 150 and then transmit it to the revocation list management server 240.

The revocation list management server 240 can update the revocation list by adding the received session identifier and record the updated revocation list in the configuration database 220, that is accessible by the edge nodes 210.

The CDN edge nodes 210 may maintain a copy of the revocation list in their internal cache and regularly update it.

The present method relies on a DRM system to prevent usage of a CDN access token without usage of a session key that is provided by the content provider system 100 to the user device 300 and to the CDN 200, via the user device 300. The session key is transmitted, in encrypted form, in a DRM license transmitted to the user device 300. It is thus protected by DRM but can be used to perform signing and/or encrypting operations by the DRM client module 320 of the user device. The session key is also transmitted, in encrypted form, to the CDN 200, via the user device 300, within CDN access tokens. In the CDN access tokens, the session key is protected by encryption with a key shared by the content provider system 100 and the CDN 200.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method for receiving a content in a user device (300), comprising the steps, performed by the user device (300), of:
sending (512) an access request to access a content to a content provider system (100);
receiving (534), from the content provider system (100), an access token for said content, said access token including an encrypted session key, and a Digital Right Management, DRM, license, including said session key; and
transmitting (550) a content request including the received access token to a content delivery network and, in response, receiving (562) from the content delivery network content data of the requested content, in a communication session;
wherein the content request further comprises an authentication tag obtained by executing a cryptographic operation (546), performed by a DRM client module (320) of the user device (300), of signing and/or encrypting, with the session key of the received DRM license, input data that is based on at least part of the content request.

2. The method according to claim 1, wherein the cryptographic operation (546) is used for:
- signing, with the session key, at least part of the content request; and
- encrypting, with the session key, a hash value of at least part of the content request.

3. The method according to claim 1 or 2, wherein the access request includes DRM license challenge data.

4. The method according to claim 3, wherein said DRM license challenge data only includes user data.

5. A method, carried out by a content provider system (100), comprising the steps of:
- receiving an access request to access a content from a user device (300);
- generating (516) a session key for a communication session for receiving said content in the user device (300) over a content delivery network (200),
- generating (520) an access token including said session key in encrypted form;
- generating (526), by a DRM license server (130), a DRM license including said session key; and
- transmitting (530) the access token and the DRM license to the user device (300).

6. The method according to claim 5, wherein the access request for the content includes DRM license challenge data, and wherein the DRM license is generated based on the received DRM license challenge data.

7. The method according to claim 5 or 6, wherein the step (520) of generating the access token includes an operation of digitally signing the access token.

8. The method according to claim 7, wherein the step (520) of generating the access token includes
- encrypting the session key and including the session key, in encrypted form, in the access token before signing the access token, or
- including the session key in the access token, and then encrypting and signing the access token.

9. The method according to any of claims 6 to 8, wherein the session key is uniquely generated for said communication session.

10. A method, performed by a content delivery network (200), for delivering a content to a user device (300), comprising the steps of:
- receiving (550) from a user device (300) at least one content request including an access token for the requested content and an authentication tag;
- determining (554) a session key based on the received access token by performing a decryption;
- checking (558) the validity of the authentication tag of the user device with the determined session key; and
- transmitting (562) content data related to the requested content in response to the received content request, if the authentication tag of the user device is valid, in a communication session.

11. The method according to claim 10, wherein
the authentication tag includes at least one of
- a digital signature of at least part of the content request, and
- a hash value, in encrypted form, of at least part of the content request; and the step (558) of checking the validity of the authentication tag includes at least one of:
- verifying said digital signature with the session key; and
- decrypting the hash value with the session key, computing a hash value of at least part of the received content request, and checking if the decrypted hash value and the computed hash value match with one another.

12. The method according to any of claims 10 and 11, further comprising a step (552) of checking the validity of the access token, wherein the step (562) of transmitting content data is performed only if the access token is valid.

13. A user device configured to perform the steps of the method according to any of claims 1 to 4.

14. A content service provider system including a DRM license server, configured to perform the steps of the method according to any of claims 5 to 9.

15. A content delivery network, configured to perform the steps of the method according to any of claims 10 to 12.
